# EUROPÄISCHE PATENTSCHRIFT

(11) **EP 2 757 129 B1**
(45) Veröffentlichungstag und Bekanntmachung des Hinweises auf die Patenterteilung: **08.07.2015**
(21) Anmeldenummer: 13151841.7
(22) Anmeldetag: 18.01.2013
(51) Int. Cl.: C08L 9/00, C08L 21/00, C08L 7/00, C08L 9/06, C08L 23/12, C08L 23/16, C08L 23/06

(54) **Dekorpaneel mit Elastomerpulver modifizierter Trägerplatte**
Decorative panel with elastomer powder modified support plate
Panneau de décoration avec plaque de support modifiée par poudre élastomère

(43) Veröffentlichungstag der Anmeldung: 23.07.2014
(73) Patentinhaber: Akzenta Paneele + Profile GmbH, 56759 Kaisersesch (DE)
(72) Erfinder: Hannig, Hans-Jürgen, 51427 Bergisch Gladbach (DE)
(74) Vertreter: Michalski Hüttermann & Partner Patentanwälte mbB

(56) Entgegenhaltungen:
- EP-A1- 2 345 695
- EP-A2- 1 106 344
- DE-A1- 19 621 063
- US-A- 5 366 779
- US-A1- 2011 305 886
- US-A1- 2012 276 348

## Beschreibung

Die vorliegende Erfindung betrifft ein Dekorpaneel welches einen plattenförmige Träger aufweist, der zumindest teilweise aus einer mit einem Elastomerpulver modifizierten thermoplastischen Zusammensetzung gefertigt ist. Darüber hinaus betriff die vorliegende Erfindung ein Verfahren zur Herstellung eines entsprechenden Dekorpaneels.

Unter dem Begriff Dekorpaneel sind im Sinne der Erfindung Wand-, Decken, oder Bodenpannele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe sind Holzart wie z.B. Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wie Steinoberflächen oder Keramikoberflächen nachempfunden.

Bisher werden solche Dekorpaneele vielfach als Laminate hergestellt, bei welchen auf eine Trägerplatte ein mit einem gewünschten Dekor vorbedrucktes Dekorpapier aufgebracht wird, auf welches dann wiederum ein sogenanntes Overlay aufgebracht wird. Nachdem gegebenenfalls noch auf der dem Dekorpapier gegenüberliegenden Seite der Trägerplatte ein Gegenzugpapier aufgebracht wurde, wird der erhaltene Schichtenaufbau unter Verwendung geeigneter druck- und/oder wärmeaktivierter Klebemittel fest miteinander verbunden.

In Anhängigkeit des gewünschten Einsatzbereiches der Dekorpaneele können diese aus unterschiedlichen Materialen gefertigt sein. Insbesondere kann dabei das Material des Trägers in Abhängigkeit des Einsatzbereichs gewählt sein. So kann der Träger beispielsweise aus einem Holzwerkstoff bestehen, sofern das Dekorpaneele keiner übermäßigen Feuchtigkeit oder Witterungsbedingungen ausgesetzt ist. Soll das Paneel hingegen z.B. in Feuchträumen oder im Außenbereich eingesetzt werden, kann der Träger beispielsweise aus einem Kunststoff bestehen.

Kunststoffe, welche bei der Herstellung entsprechender Paneele eingesetzt werden können, sind beispielsweise thermoplastische Kunststoffe, wie Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser. Die Kunststoffe können übliche Füllstoffe enthalten, beispielsweise Kalziumcarbonat (Kreide), Aluminiumoxid, Kieselgel, Quarzmehl, Holzmehl, Gips. Auch können sie in bekannter Weise eingefärbt sein.

Zur Aufbringung eines Dekors auf die Trägerplatte bzw. einen plattenförmigen Träger ist es bekannt, ein mit einem entsprechenden Dekor bedrucktes Dekorpapier auf den plattenförmigen Träger aufzubringen, z.B. mittels einer zuvor auf den plattenförmigen Träger aufgebrachten Harzschicht als Verbindungsmittel. Darüber hinaus ist es bekannt, Dekorpaneele im sogenannten Direktdruck mit einem Dekor zu versehen.

Unter dem Begriff "Direktdruck" wird im Sinne der Erfindung das Aufbringen eines Dekors direkt auf den Träger eines Paneels oder auf eine auf dem Träger aufgebrachte nicht bedruckte Faserwerkstoffschicht verstanden. Entgegen der konventionellen Verfahren, bei welchen auf einen Träger eine zuvor mit einem gewünschten Dekor bedruckte Dekorschicht aufgebracht wird, erfolgt beim Direktdruck das Aufdrucken des Dekors unmittelbar im Zuge der Paneel-Herstellung. Dabei können unterschiedliche Drucktechniken, wie beispielsweise Flexo-Druck, Offset-Druck oder Siebdruck zum Einsatz gelangen. Insbesondere können dabei Digitaldrucktechniken, wie beispielsweise Inkjet-Verfahren oder Laserdruck-Verfahren eingesetzt werden.

Im Sinne der Erfindung sind unter dem Begriff Faserwerkstoffe Materialien wie z.B. Papier und Vliese auf Basis pflanzlicher, tierische, mineralischer oder auch künstlicher Fasern zu verstehen, ebenso wie Pappen. Beispiele sind Faserwerkstoffe aus pflanzlichen Fasern sind neben Papieren und Vliesen aus Zellstofffasern, Platten aus Biomasse wie Stroh, Maisstroh, Bambus, Laub, Algenextrakte, Hanf, Baumwolle oder Ölpalmenfasern. Beispiele für tierische Faserwerkstoffe sind keratinbasierte Materialien wie z.B. Wolle oder Rosshaar. Beispiele für mineralische Faserwerkstoffe sind aus Mineralwolle oder Glaswolle.

Zum Schutz der aufgebrachten Dekorschicht sind in der Regeln Verschleiß- oder Deckschichten oberhalb der Dekorschicht aufgebracht. Eine Verschleiß- und/oder Deckschicht im Sinne der Erfindung ist eine als äußerer Abschluss aufgebrachte Schicht, welche insbesondere die Dekorschicht vor Abnutzung oder Beschädigung durch Schmutz, Feuchtigkeitseinfluss oder mechanische Einwirkungen, wie beispielsweise Abrieb, schützt.

Vielfach ist es vorgesehen, dass in solche Verschleiß- oder Deckschichten eine mit dem Dekor übereinstimmende Oberflächenstrukturierung eingebracht ist. Unter einer mit dem Dekor übereinstimmenden Oberflächenstrukturierung ist zu verstehen, dass die Oberfläche des Dekorpaneels eine haptisch wahrnehmbare Struktur aufweist, welche in ihrer Form und ihrem Muster dem aufgebrachten Dekor entspricht, um so eine möglichst originalgetreue Nachbildung eines natürlichen Werkstoffes auch hinsichtlich der Haptik zu erhalten.

Um die Anwendungsbereiche der genannten Dekorpaneele insbesondere in Feuchträumen oder im Außenbereich zu erweitern wurden in letzter Zeit neben Trägern auf Basis von Holzwerkstoffen als Werkstoff für die plattenförmigen Träger auch vermehrt Kunststoffe als Werkstoff für solche Träger eingesetzt. Solche Paneele sind beispielsweise aus der Internationalen Patentanmeldung WO 2010/023042A1 bekannt. Ein Nachteil dieser plattenförmigen Träger ist es, dass die für die Herstellung der Träger eingesetzten Kunststoffe zum einen vorwiegend aus Mineralölen gewonnen werden, deren beschränke Ressource zu einem maßgeblich Kostenanteil beiträgt, zum anderen solche mineralölbasierten Produkte vielfach kritische beurteilt werden. Darüber hinaus stehen bisher für die plattenförmigen Träger eingesetzte Kunststoff, wie z.B. insbesondere Polyvinylchlorid (PVC), verstärkt im Fokus öffentlicher Kritik, da sie ein aus ökologischer Sicht relevantes Problempotential beinhalten können. So müssen beispielsweise zur Herstellung von Weich-PVC Weichmacher, z.B. aus der Gruppe der Phthalate, in einer Menge von 20-30 Gew.-% zugesetzt werden, um die gewünschte Elastizität des PVC-Materials zu gewährleisten. Derartige Zusatzstoffe werden jedoch im Zuge neuerer gesetzlicher Regelungen kritisch bewertet, warum der Einsatz solcher Stoffe versucht wird zu vermeiden.

Dies berücksichtigend ist es die Aufgabe der vorliegenden Erfindung, ein Dekorpaneel auf Basis einen Kunststoffträgers anzugeben, welches die aus dem Stand der Technik bekannten Probleme zu überwinden vermag. Darüber hinaus ist es eine Aufgabe der vorliegenden Erfindung, ein Verfahren zur Herstellung eines entsprechenden Dekorpaneels anzugeben.

Gelöst wir diese Aufgabe durch ein Dekorpaneel gemäß Anspruch 1 sowie ein Verfahren gemäß Anspruch 11. Ausgestaltungen der Erfinden sich in den abhängigen Ansprüchen sowie der weiteren Beschreibung.

Mit der Erfindung wird somit ein Dekorpaneel vorgeschlagen, welches zumindest einen plattenförmigen Träger und eine darauf angeordnete Dekorschicht aufweist und welches dadurch gekennzeichnet ist, dass der plattenförmige Träger zumindest teilweise aus einer mittels Schmelzmischen mit einem Elastomerpulver modifizierten thermoplastischen Zusammensetzung mit mindestens einem thermoplastischen Matrixmaterial und mindestens einem in das Matrixmaterial eingebundenen feinteiligen, vernetzten und pulverförmigen Elastomermaterial gefertigt ist.

Überraschender Weise hat sich gezeigt, dass ein mit einem Elastomerpulver modifizierten thermoplastischen Zusammensetzung mit mindestens einem thermoplastischen Matrixmaterial und mindestens einem in das Matrixmaterial eingebundenen feinteiligen, vernetzten und pulverförmigen Elastomermaterial in hervorragender Weise als Werkstoff für die zur Herstellung plattenförmigen Trägern für Dekorpaneele geeignet ist. Ein solches Elastomermaterial ist beispielsweise aus dem Europäischen Patent EP 2 345 695 B 1 bekannt.

Gemäß einer bevorzugten Ausgestaltung der Erfindung weist das Matrixmaterial eine Shore Härte [X] nach DIN 53505 und das Elastomermaterial eine Shore Härte [Y] nach DIN 53505 auf und [X] und [Y] stehen in dem Verhältnis [Y] = [X] ± [Z], mit [Z]≤30 und das Elastomermaterial weist eine Shore Härte [Y] nach DIN 53505 zwischen ≥50 und ≤70 auf. Ein derart gestaltetes Material zeigt hervorragende Eigenschaften für Dekorpaneele hinsichtlich Trittschalldämmung und Feuchtigkeitsbeständigkeit.

Bevorzugt weist das so hergestellte Material für den Einsatz als plattenförmiger Träger in einem Dekorpaneel eine Härte zwischen Shore-A 60 bis Shore-D 60, bevorzugt eine Härte von Shore-D 30 bis Shore-D 50 auf.

Gemäß einer bevorzugten Ausgestaltung der Erfindung weist das Matrixmaterial dabei eine Härte, gemessen als Shore-D, in einem Bereich zwischen ≥40 D und ≤90 D. Gemäß einer weiteren Ausgestaltung der Erfindung liegt der Anteil des Elastomermaterials in der thermoplastischen Zusammensetzung bevorzugt zwischen ≥20 und ≤85 Gew.-%, weiter bevorzugt zwischen ≥50 und ≤75 Gew.-%.

Das Elastomermaterial ist gemäß einer weiteren Ausgestaltung der Erfindung wenigstens ein Material, welches ausgewählt ist aus der Gruppe bestehend Olefin-Dien-Kautschuke, Styrol-Butadien-Kautschuke und Naturkautschuke. Dabei ist es insbesondere bevorzugt, dass das Elastomermaterial zumindest teilweise aus rezyklisierten Kunststoffen, wie beispielsweise Produktionsresten von technischen Elastomererzeugnissen, abgeschälte Laufflächen von LKW-Reifen, Styrol-Butadien-Kautschuk-Gummimehle aus Produktionsresten etc. besteht.

Bevorzugt weist das pulverförmigen Elastomermaterial eine mittlere Korngröße von ≥100µm und ≤600µm, vorzugsweise zwischen ≥100µm und ≤400µm auf.

Gemäß einer weiteren Ausgestaltung der Erfindung ist das thermoplastische Matrixmaterial ein Polyolefin und/oder ein Olefin-Copolymer, bevorzugt wenigstens ein Material, welches ausgewählt ist aus der Gruppe bestehend aus Polypropylen, Polyethylen und Ethylen-Propylen-Dien-Kautschuk (EPDM).

Bevorzugt liegt der Anteil des thermoplastischen Matrixmaterials in der thermoplastischen Zusammensetzung in einem Bereich zwischen ≥15 Gew.-% und ≤80 Gew.-%. Dabei kann das thermoplastische Matrixmaterial insbesondere aus einer Mischung unterschiedlicher thermoplastischer Materialien bestehen. So kann es beispielsweise vorgesehen sein, dass das in der thermoplastischen Zusammensetzung enthaltene thermoplastische Matrixmaterial einen Hauptthermoplasten und einen Zusatzthermoplasten aufweist. Dabei kann der Anteil des Hauptthermoplasten beispielsweise in einem Bereich zwischen ≥5 Gew.-% und ≤70 Gew.-% bezogen auf das die thermoplastische Zusammensetzung insgesamt liegen. Der Zusatzthermoplast kann in der erfindungsgemäßen Zusammensetzung in einem Konzentrationsbereich zwischen beispielsweise ≥0 Gew.-% und ≤50 Gew.-%, vorzugsweise ≤30 Gew.-% enthalten sein. Beispiele für geeignete Hauptthermoplasten sind dabei thermoplastische Olefine auf Basis von isotaktischem Polypropylen und Ethylen-Propylen-Dien-Kautschuk (PP/EPDM). Geeignete Zusatzthermoplaste sind beispielsweise Polyolefin, wie z.B. Polypropylene.

Gemäß einer weiteren Ausgestaltung der Erfindung wird die Dekorschicht aus einem auf den plattenförmigen Träger aufgebrachten bedruckten oder unbedruckten Dekorpapier/Dekorfolie oder einer mittels eines Direktdruckverfahren auf den plattenförmigen Träger direkt oder auf einen zuvor auf den plattenförmigen Träger aufgebrachten Druckuntergrund aufgebrachten Farbschicht gebildet. Dabei ist es insbesondere bevorzugt, dass die Dekorschicht in einem Direktdruckverfahren aufgebracht wird. Sowohl bei einem Direktdruck auf den plattenförmigen Träger, als auch bei einem Direktdruck auf eine auf den plattenförmigen Träger zuvor aufgebrachte unbedruckten Vlies-, Folien oder Papierschicht (Dekorpapierschicht/Dekorfolienschicht) kann es vorgesehen sein, dass vor dem Aufbringen der Farbe ein Druckuntergrund aufgebracht wird. Dabei kann es insbesondere im dem Fall, dass der Druckuntergrund direkt auf den plattenförmigen Träger ohne eine dazwischenliegende Vlies-, Folien- oder Papierschicht aufgebracht wird vorgesehen sein, dass als Druckuntergrund eine Zusammensetzung aufgebracht ist, welche zum einen radikalisch härtende Bestandteile und zum anderen Polyurethaneanteile aufweist, wie dies beispielsweise aus Dual-Cure Lacksystemen bekannt ist. Dabei kann es insbesondere vorgesehen sein, dass der Druckuntergrund Urethanacrylate enthält. Darüber hinaus kann der Druckuntergrund insbesondere Pigmente, wie beispielsweise Titandioxid enthalten.

Gemäß einer weiteren Ausgestaltung eines erfindungsgemäßen Dekorpaneels kann dieses eine auf die Dekorschicht aufgebrachte, transparente oder transluzente Deck- und/oder Verschleißschicht auf. Die zum Schutz der Dekorschicht aufgebrachte Verschleiß- oder Deckschicht kann in einem nachfolgenden Verfahrensschritt aufgebracht werden, wobei es insbesondere vorgesehen seien kann, dass die bereits mit der Dekorschicht versehene Dekorplatte als Halbzeug vor dem Aufbringen der Verschleiß und/oder Deckschicht zwischengelagert wird. Die Verschleiß- und/oder Deckschicht kann beispielsweise Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann es vorgesehen sein, dass der Hartstoff in einer Menge zwischen 5 Gew.-% und 40 Gew.-%, vorzugsweise zwischen 15 Gew.-% und 25 Gew.-% in der Verschleiß und/oder Deckschichtzusammensetzung enthalten ist. Vorzugsweise weist der Hartstoff dabei einen mittleren Korndurchmesser zwischen 10 µm und 250 µm, weiter vorzugsweise zwischen 10µm und 100µm auf. Hierdurch wird vorteilhafter Weise erreicht, dass die Verschleiß- und/oder Deckschichtzusammensetzung eine stabile Dispersion ausbildet und eine Entmischung bzw. ein Absetzten des Hartstoffes in der Verschleiß- und/oder Deckschichtzusammensetzung vermieden werden kann. Zur Ausbildung einer entsprechenden Verschleiß- und/oder Deckschicht ist es in einer Ausgestaltung der Erfindung vorgesehen, dass die Hartstoff enthaltende und vorzugsweise strahlungshärtbare Zusammensetzung in einer Konzentration zwischen 10 g/m² und 250 g/m², vorzugsweise zwischen 25 g/m² und 100g/m² aufgetragen wird. Dabei kann die Auftragung beispielsweise mittels Walzen, wie Gummiwalzen oder mittels Gießvorrichtungen aufgetragen werden. In einer weiteren Ausgestaltung der Erfindung kann es vorgesehen sein, dass der Hartstoff zum Zeitpunkt des Auftrages der Verschleiß- und/oder Deckschichtzusammensetzung nicht in der Zusammensetzung enthalten ist, sondern als Partikel auf die aufgetragenen Verschleißschichtzusammensetzung aufgestreut wird und diese im Anschluss gehärtet wird.

Desweiteren kann es vorgesehen, dass in die Verschleiß- oder Deckschicht eine mit dem Dekor übereinstimmende Oberflächenstrukturierung eingebracht wird. Dabei kann es vorgesehen sein, dass die Trägerplatte bereits eine Strukturierung aufweist und eine Ausrichtung eines Druckwerkzeuges zur Aufbringung des Dekors und der Trägerplatte zueinander in Abhängigkeit mittels der mittels optischer Verfahren erfassten Strukturierung der Trägerplatte erfolgt. Zur Ausrichtung des Druckwerkzeuges und der Trägerplatte zueinander kann es dabei vorgesehen sein, dass eine zur Ausrichtung notwendige Relativbewegung zwischen Druckwerkzeug und Trägerplatte zueinander durch eine Verschiebung der Trägerplatte oder durch eine Verschiebung des Druckwerkzeugs erfolgt. Gemäß einer weiteren Ausgestaltung der Erfindung ist es vorgesehen, dass eine Strukturierung der Dekorpaneele nach dem Auftrag der Deck- und/oder Verschleißschicht erfolgt. Hierzu kann es bevorzugt vorgesehen sein, dass als Deck- und/oder Verschleißschicht eine härtbare Zusammensetzung aufgetragen wird und ein Aushärtungsprozess nur in dem Maße erfolgt, dass lediglich eine Teilhärtung der Deck- und/oder Verschleißschicht erfolgt. In die so teilgehärtete Schicht wird mittels geeigneter Werkzeuge, wie beispielsweise einer Hartmetall-Strukturwalz oder eines Stempels, eine gewünschte Oberflächenstruktur eingeprägt. Dabei erfolgt die Prägung in Übereinstimmung mit dem aufgebrachten Dekor. Zur Gewährleistung einer hinreichenden Übereinstimmung der einzubringenden Struktur mit dem Dekor kann es vorgesehen sein, dass die Trägerplatte und das Prägewerkzeug durch entsprechende Relativbewegungen zueinander ausgerichtet werden. Im Anschluss an die Einbringung der gewünschten Struktur in die teilgehärtete Deck- und/oder Verschleißschicht erfolgt eine weitere Härtung der nun strukturierten Deck- und/oder Verschleißschicht.

In einer weiteren Ausgestaltung des erfindungsgemäßen Verfahrens kann es vorgesehen sein, dass die Strukturierung im Zuge des Druckverfahrens erzeugt wird. Hierzu kann es beispielsweise vorgesehen sein, dass ein mehrfacher Farbauftrag in der Weise erfolgt, dass über den Druckuntergrund erhabene Bereiche entstehen, welche eine gewünschte dreidimensionale Struktur ergeben. Auf die so erzeugte Struktur kann dann eine Verschleiß- und/oder Deckschicht aufgebracht werden.

Gemäß einer weiteren Ausgestaltung der Erfindung kann es vorgesehen sein, dass das Dekorpaneel zumindest in einen Randbereich des plattenförmigen Trägers eine Profilierung aufweist. Dabei kann es insbesondere vorgesehen sein, dass das Dekor auch im Bereich der Profilierung aufgebracht ist, so dass die Profilierung vor dem Aufbringen der Dekorschicht auf den plattenförmigen Träger erfolgt. Alternativ oder ergänzend kann eine Profilierung auch nach dem Aufbringen der Dekorschicht erfolgen. Bei einer Profilierung im Sinne der Erfindung ist es vorgesehen, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Ein dekoratives Profil im Sinne der Erfindung ist beispielsweise eine im Kantenbereich des Dekorpaneels eingebrachte Fase, um beispielsweise zwischen zwei miteinander verbundenen Paneelen nach deren Verbindung eine Fuge zu simulieren, wie sie beispielsweise bei sogenannten Landhausdielen auftritt.

Bei einer teilweisen Profilierung des Dekorpaneels werden nicht bereits alle in dem letztendlichen Paneel vorzusehenden Profile eingebracht, sondern nur ein Teil der vorzusehenden Profile, während weitere Profile in einem anschließenden Schritt eingebracht werden. So kann es beispielsweise vorgesehen sein, dass das in einem Paneel vorzusehende dekorative Profil, wie beispielsweise eine Fase, in einem Arbeitsschritt eingebracht wird, während das funktionale Profil, beispielsweise Nut/Feder in einem nachgelagerten Arbeitsschritt eingebracht wird.

Durch eine Aufbringung des Dekors erst nach dem zumindest teilweisen Profilieren des Trägers, etwa durch die vorbeschriebenen Verfahren wie beispielsweise Direktdruckverfahren, wird ein Abtragen oder Beschädigen des Dekors im Zuge der Profilierung in vorteilhafter Weise vermieden. Dadurch entspricht das Dekor auch in den Bereichen der Profilierung in detailgetreuer Weise der gewünschten Imitation beispielsweise eines Naturwerkstoffes.

Gemäß einer weiteren Ausgestaltung der Erfindung kann es vorgesehen sein, dass die Profilierung nicht durch spanabhebende Bearbeitung in die plattenförmigen Träger eingebracht wird, sondern zumindest ein Teil der vorzusehenden Profilierung bereits bei der Herstellung der plattenförmigen Träger erzeugt wird. Die kann beispielsweise durch Verwendung entsprechender Umformverfahren, wie beispielsweise Spritzgießen oder Strangextrusion, erfolgen.

Gemäß einer bevorzugten Ausgestaltung der Erfindung ist die Profilierung zumindest teilweise derart ausgestaltet, dass mehrere Dekorpaneele mittels korrespondierender Profile miteinander lösbar verbindbar sind.

Gemäß einer weiteren Ausgestaltung der Erfindung kann es vorgesehen sein, dass das Dekorpaneel auf der der Dekorschicht gegenüberliegenden Seite des plattenförmigen Trägers einen Gegenzug aufweist. Insbesondere durch die erfindungsgemäß verwendeten plattenförmigen Träger auf Basis der beschriebenen thermoplastischen Zusammensetzung, welche eine hohe Elastizität aufweisen können, kann dabei der Gegenzug zur Vermeidung von Verformungen des plattenförmigen Trägers durch die aufgebrachte Dekor-, Deck- und/oder Verschleißschicht dienen. Dazu kann es insbesondere vorgesehen sein, dass der Gegenzug aus einen der der Dekorschicht gegenüberliegenden Seite aufgebrachten Folien-, Vlies- und/oder Papierschicht gebildet wird. Gemäß einer besonders bevorzugten Ausgestaltung der Erfindung kann es dabei vorgesehen sein, dass der Gegenzug in einem gemeinsamen Verfahrensschritt mit dem Aufbringen einer unbedruckten Dekorpapierschicht auf der Dekorseite des plattenförmigen Trägers und/oder in einem gemeinsamen Verfahrensschritt mit dem Aufbringen eines Druckuntergrundes auf der Dekorseite des plattenförmigen Trägers aufgebracht wird. Besonders bevorzugt ist es dabei, dass als Gegenzug eine Folienschicht aufgebracht wird und so ein insbesondere feuchtigkeits- und/oder wasserbeständiger Gegenzug ausgebildet wird.

Die erfindungsgemäßen Dekorpaneele bieten ökonomische und ökologische Vorteile, wobei sie sich insbesondere durch die folgenden Eigenschaften auszeichnen:
- Wasserfeste Trägerplatte mit einer Schichtdicke von 3-18mm
- Hohe Elastizität welche durch die Variation der Anteile aus Thermoplastischer Kunststoffmatrix und den darin eingebetteten gummielastischen Recyclingkomponenten gezielt auf den Einsatzzweck eingestellt werden kann
- Die Trägerplatte kann durch Fräsen mit Clickprofilen und Verriegelungselementen ausgestattet werden wobei bedingt durch die Elastizität des Plattenmaterials auf Federelemente aus einem weiteren Material verzichtet werden kann
- Die Trägerplatte kann nach einer Oberflächenaktivierung grundiert, bedruckt und mit einer abriebfesten Verschleißschicht ausgestattet werden
- Durch Auswahl einer geeigneten Thermoplast-Komponente kann eine hohe Temperaturbeständigkeit über 100° erzielt werden
- Der Plattenwerkstoff kann problemlos entsorgt werden, da die Platte chlorfrei ist und bei der Verbrennung keine Dioxine oder ähnliche Gefahrstoffe entstehen
- Die Platte enthält keine Weichmacher und bezieht ihre hohe Elastizität aus den eingelagerten Elastomerpartikeln
- Die Platte stellt ein ökologisch anspruchsvolles Ersatzmaterial für PVC dar
- Durch den Einsatz von Recyclingmaterialien welche im Preis deutlich unter dem Preisniveau thermoplastischer Kunststoffe liegen, können die Herstellkosten für eine Kunststoffplatte deutlich reduziert werden

Dabei fallen die einsetzbaren Recyclingwertstoffe aus der Gummi- und Reifenindustrie weltweit in großen Mengen an und können somit kostengünstig bereitgestellt werden.

Darüber hinaus betrifft die vorliegende Erfindung ein Verfahren zur Herstellung eines Dekorpaneels, aufweisend die Verfahrensschritt:
a) Bereitstellen eines plattenförmigen Trägers; und
b) Aufbringen einer Dekorschicht auf den plattenförmigen Träger, wobei als plattenförmiger Träger ein Träger welcher zumindest teilweise aus einer mit einem Elastomerpulver modifizierten thermoplastischen Zusammensetzung mit mindestens einem thermoplastischen Matrixmaterial und mindestens einem in das Matrixmaterial eingebundenen feinteiligen, vernetzten und pulverförmigen Elastomermaterial gefertigt ist, bereitgestellt wird.

Gemäß einer weiteren Ausgestaltung des erfindungsgemäßen Verfahrens kann es vorgesehen sein, dass die Dekorschicht mittels eines Direktdruckverfahrens aufgebracht wird. Dabei kann es insbesondere vorgesehen sein, dass die Dekorschicht mittels eines Digitaldruckverfahrens unter Verwendung strahlungshärtbarer Tinte aufgebracht wird.

Desweiteren kann es vorgesehen sein, dass vor der Aufbringung der Dekorschicht ein Druckuntergrund auf den plattenförmigen Träger aufgebracht wird. Dabei kann es insbesondere vorgesehen sein, dass als Druckuntergrund eine Zusammensetzung aufgebracht wird, welche zum einen radikalisch härtende Bestandteile und zum anderen Polyurethaneanteile aufweist, wie dies beispielsweise aus Dual-Cure Lacksystemen bekannt ist. Dabei kann es insbesondere vorgesehen sein, dass der Druckuntergrund Urethanacrylate enthält. Darüber hinaus kann der Druckuntergrund insbesondere Pigmente, wie beispielsweise Titandioxid enthalten.

In einer weiter bevorzugten Ausgestaltung des erfindungsgemäßen Verfahrens wird ein Gegenzug auf der der Dekorschicht gegenüberliegenden Seite des plattenförmigen Trägers aufgebracht wird. Dabei kann es vorgesehen sein, dass der Gegenzug in einem gemeinsamen Verfahrensschritt mit dem Aufbringen einer unbedruckten Dekorpapier-/Dekorfolienschicht auf der Dekorseite des plattenförmigen Trägers und/oder in einem gemeinsamen Verfahrensschritt mit dem Aufbringen eines Druckuntergrundes auf der Dekorseite des plattenförmigen Trägers aufgebracht wird

In einer weiter bevorzugten Ausgestaltung des erfindungsgemäßen Verfahrens wird auf die Dekorschicht eine transparente oder transluzente Deck- und/oder Verschleißschicht aufgebracht. Dabei kann es insbesondere vorgesehen sein, dass als Deck- und/oder Verschleißschicht eine strahlungshärtbare Zusammensetzung aufgebracht wird.

## Patentansprüche

1. Dekorpaneel, zumindest aufweisend einen plattenförmigen Träger und eine darauf angeordnete Dekorschicht, **dadurch gekennzeichnet, dass** der plattenförmige Träger zumindest teilweise aus einer mittels Schmelzmischen mit einem Elastomerpulver modifizierten thermoplastischen Zusammensetzung mit mindestens einem thermoplastischen Matrixmaterial und mindestens einem in das Matrixmaterial eingebundenen feinteiligen, vernetzten und pulverförmigen Elastomermaterial gefertigt ist.

2. Dekorpaneel gemäß Anspruch 1, wobei das Matrixmaterial eine Shore Härte [X] nach DIN 53505 und das Elastomermaterial eine Shore Härte [Y] nach DIN 53505 aufweisen und [X] und [Y] in dem Verhältnis [Y] = [X] ± [Z], mit [Z]≤30 stehen und das Elastomermaterial eine Shore Härte [Y] nach DIN 53505 zwischen ≤50 und ≤70 aufweist.

3. Dekorpaneel gemäß einem der vorhergehenden Ansprüche, wobei der Anteil des Elastomermaterials in der thermoplastischen Zusammensetzung zwischen ≥20 und ≤85 Gew.-% liegt.

4. Dekorpaneel gemäß einem der vorhergehenden Ansprüche, wobei das Elastomermaterial wenigstens ein Material ist, welches ausgewählt ist aus der Gruppe bestehend Olefin-Dien-Kautschuke, Styrol-Butadien-Kautschuke und Naturkautschuke.

5. Dekorpaneel gemäß einem der vorhergehenden Ansprüche, wobei das thermoplastische Matrixmaterial ein Polyolefin und/oder Olefin-Colpolymer ist, bevorzugt wenigstens ein Material, welches ausgewählt ist aus der Gruppe bestehend aus Polypropylen, Polyethylen und Ethylen-Propylen-Dien-Kautschuk.

6. Dekorpaneel gemäß einem der vorhergehenden Ansprüche, wobei die Dekorschicht aus einem auf den plattenförmigen Träger aufgebrachten bedruckten oder unbedruckten Dekorpapier oder einer mittels eines Direktdruckverfahren auf den plattenförmigen Träger direkt oder auf einen zuvor auf den plattenförmigen Träger aufgebrachten Druckuntergrund aufgebrachten Farbschicht gebildet wird.

7. Dekorpaneel gemäß einem der vorhergehenden Ansprüche, wobei das Paneel eine auf die Dekorschicht aufgebrachte, transparente oder transluzente Deck- und/oder Verschleißschicht aufweist.

8. Dekorpaneel gemäß einem der vorhergehenden Ansprüche, wobei dieses zumindest in einen Randbereich des plattenförmigen Trägers eine Profilierung aufweist.

9. Dekorpaneel gemäß Anspruch 8, wobei die Profilierung derart ausgestaltete ist, dass mehrere Dekorpaneele mittels korrespondierender Profile miteinander lösbar verbindbar sind.

10. Dekorpaneel gemäß einem der vorhergehenden Ansprüche, wobei dieses auf der der Dekorschicht gegenüberliegenden Seite des plattenförmigen Trägers einen Gegenzug aufweist.

11. Verfahren zur Herstellung eines Dekorpaneels, aufweisend die Verfahrensschritt:
a) Bereitstellen eines plattenförmigen Trägers; und
b) Aufbringen einer Dekorschicht auf den plattenförmigen Träger,
wobei als plattenförmiger Träger ein Träger welcher zumindest teilweise aus einer mit einem Elastomerpulver modifizierten thermoplastischen Zusammensetzung mit mindestens einem thermoplastischen Matrixmaterial und mindestens einem in das Matrixmaterial eingebundenen feinteiligen, vernetzten und pulverförmigen Elastomermaterial gefertigt ist, bereitgestellt wird.

12. Verfahren gemäß Anspruch 11, wobei die Dekorschicht mittels eines Direktdruckverfahrens aufgebracht wird.

13. Verfahren gemäß einem der Ansprüche 11 oder 12, wobei vor der Aufbringung der Dekorschicht ein Druckuntergrund auf den plattenförmigen Träger aufgebracht wird.

14. Verfahren gemäß einem der Ansprüche 11 bis 13, wobei ein Gegenzug auf der der Dekorschicht gegenüberliegenden Seite des plattenförmigen Trägers aufgebracht wird.

15. Verfahren gemäß einem der vorhergehenden Ansprüche, wobei auf die Dekorschicht eine transparente oder transluzente Deck- und/oder Verschleißschicht aufgebracht wird.

## Claims

1. Decorative panel, at least comprising a plate-shaped carrier and a decorative layer disposed thereon, **characterized in that** the plate-shaped carrier is at least partially manufactured from a thermoplastic composition modified with an elastomer powder by means of melt mixing, wherein the thermoplastic composition includes at least one thermoplastic matrix material and at least one fine-particle, cross-linked, powdery elastomeric material embedded in the matrix material.

2. Decorative panel according to claim 1, wherein the matrix material has a Shore hardness [X] in accordance with DIN 53505 and the elastomeric material has a Shore hardness [Y] in accordance with DIN 53505, wherein [X] and [Y] satisfy the relation [Y] = [X] ± [Z], [Z] ≤ 30 and the elastomeric material has a Shore hardness [Y] in accordance with DIN 53505 between ≥ 50 and ≤ 70.

3. Decorative panel according to any one of the preceding claims, wherein the proportion of the elastomeric material in the thermoplastic composition is between ≥ 20 and ≤ 85 wt.-%.

4. Decorative panel according to any one of the preceding claims, wherein the elastomeric material is at least one material selected from the group consisting of olefin diene rubbers, styrene butadiene rubbers and natural rubbers.

5. Decorative panel according to any one of the preceding claims, wherein the thermoplastic matrix material is a polyolefin and/or an olefin copolymer, preferably at least one material selected from the group consisting of polypropylene, polyethylene and ethylene propylene diene rubber.

6. Decorative panel according to any one of the preceding claims, wherein the decorative layer is formed from a printed or unprinted decorative paper applied onto the plate-shaped carrier or from a coating of paint directly applied onto the plate-shaped carrier by means of a direct printing process or applied onto a print substrate previously applied onto the plate-shaped carrier.

7. Decorative panel according to any one of the preceding claims, wherein the panel comprises a transparent or translucent top and/or wearing layer applied onto the decorative layer.

8. Decorative panel according to any one of the preceding claims, wherein the panel comprises a profiling at least in an edge region of the plate-shaped carrier.

9. Decorative panel according to claim 8, wherein the profiling is configured such that a plurality of decorative panels can releasably connected to each other by means of corresponding profiles.

10. Decorative panel according to any one of the preceding claims, wherein the panel comprises a backing on the side of the plate-shaped carrier opposite to the decorative layer.

11. Method for producing a decorative panel, comprising the steps of:
a) providing a plate-shaped carrier; and
b) applying a decorative layer onto the plate-shaped carrier,
wherein as the plate-shaped carrier a carrier is provided which is manufactured at least partially from a thermoplastic composition modified with an elastomer powder, wherein the thermoplastic composition comprises at least one thermoplastic matrix material and at least one fine-particle, cross-linked powdery elastomeric material embedded in the matrix material.

12. Method according to claim 11, wherein the decorative layer is applied by means of a direct printing process.

13. Method according to any one of claims 11 or 12, wherein prior to the application of the decorative layer a print substrate is applied onto the plate-shaped carrier.

14. Method according to any one of claims 11 to 13, wherein a backing is applied to the side of the plate-shaped carrier opposite to the decorative layer.

15. Method according to any one of the preceding claims, wherein a transparent or translucent top and/or wearing layer is applied onto the decorative layer.

## Revendications

1. Panneau de décoration, présentant au moins un support en forme de plaque et une couche décorative disposée dessus, **caractérisé en ce que** le support en forme de plaque est fabriqué au moins partiellement avec une composition thermoplastique modifiée avec un élastomère au moyen d'un mélange à l'état fondu, avec au moins un matériau de matrice thermoplastique, et au moins un matériau élastomère finement divisé, réticulé et sous forme de poudre imbriqué dans le matériau de la matrice.

2. Panneau de décoration selon la revendication 1, dans lequel le matériau de la matrice présente une dureté Shore [X] selon la norme DIN 53505 et le matériau élastomère présente une dureté Shore [Y] selon la norme DIN 53505, et [X] et [Y] ont entre eux la relation [Y] = [X] ± [Z], avec [Z] ≤ 30 et l'élastomère présente une dureté Shore [Y] selon la norme DIN 53505 entre ≥ 50 et ≤ 70.

3. Panneau de décoration selon l'une des revendications précédentes, dans lequel la proportion de matériau élastomère dans la composition thermoplastique se situe entre ≥ 20 et ≤ 85 % en poids.

4. Panneau de décoration selon l'une des revendications précédentes, dans lequel le matériau élastomère est au moins un matériau, lequel est choisi dans le groupe constitué par les caoutchoucs oléfines diènes, les caoutchoucs butadiène styrène et les caoutchoucs naturels.

5. Panneau de décoration selon l'une des revendications précédentes, dans lequel le matériau de la matrice thermoplastique est une polyoléfine et/ou un copolymère d'oléfine, de préférence au moins un matériau, lequel est choisi dans le groupe constitué par le polypropylène, le polyéthylène et le caoutchouc éthylène propylène diène.

6. Panneau de décoration selon l'une des revendications précédentes, dans lequel la couche décorative est formée par un papier décoratif imprimé ou non imprimé rapporté sur le support en forme de plaque ou une couche de peinture appliquée directement sur le support en forme de plaque par un procédé d'impression direct ou une impression de fond rapportée préalablement sur le support en forme de plaque.

7. Panneau de décoration selon l'une des revendications précédentes, dans lequel le panneau présente une couche de revêtement et/ou une couche d'usure transparente ou translucide rapportée sur la couche décorative.

8. Panneau de décoration selon l'une des revendications précédentes, dans lequel celui-ci présente un profilé au moins dans une zone de bordure du support en forme de plaque.

9. Panneau de décoration selon la revendication 8, dans lequel le profilé est conçu de telle manière que plusieurs panneaux de décoration peuvent être reliés ensemble en restant détachables au moyen de profilés se complétant.

10. Panneau de décoration selon l'une des revendications précédentes, dans lequel celui-ci présente une partie complémentaire sur la face située à l'opposé de la couche décorative du support en forme de plaque.

11. Procédé de fabrication d'un panneau de décoration, présentant les étapes de procédé :
a) mise au point d'un support en forme de plaque ; et
b) apport d'une couche décorative sur le support en forme de plaque,
où, en tant que support en forme de plaque, un support, lequel est fabriqué à partir d'une composition thermoplastique modifiée par une poudre d'élastomère avec au moins un matériau de matrice thermoplastique et au moins un matériau élastomère finement divisé, réticulé et sous forme de poudre est imbriqué dans le matériau de la matrice, est mis au point.

12. Procédé selon la revendication 11, dans lequel la couche décorative est rapportée au moyen d'un procédé d'impression directe.

13. Procédé selon l'une des revendications 11 ou 12 dans lequel, avant l'apport de la couche décorative, une impression de fond est rapportée sur le support en forme de plaque.

14. Procédé selon l'une des revendications 11 à 13, dans lequel une partie complémentaire est rapportée sur la face située à l'opposé de la couche décorative du support en forme de plaque.

15. Procédé selon l'une des revendications précédentes, dans lequel une couche de revêtement et/ou d'usure transparente et/ou translucide est rapportée sur la couche décorative.
